# FASCICULE DE BREVET EUROPEEN

(11) **EP 2 447 323 B1**
(45) Date de publication et mention de la délivrance du brevet: **17.09.2014**
(21) Numéro de dépôt: 11184185.4
(22) Date de dépôt: 06.10.2011
(51) Int. Cl.: C08L 31/04, C08L 23/08, C08L 33/08, C08L 101/02, H01B 3/44, H01B 13/14, C08L 51/04

(54) **Composition élastomère réticulable**
Vernetzbare Elastomerzusammensetzung
Cross-linkable elastomer composition

(30) Priorité: 26.10.2010 FR 1058789
(43) Date de publication de la demande: 02.05.2012
(73) Titulaire: Nexans, 75008 Paris (FR)
(72) Inventeur: Dalbe, Bernard, 69005 Lyon (FR); Cucumel, Olivier, 38150 Assieu (FR)
(74) Mandataire: Peguet, Wilfried

(56) Documents cités:
- EP-A1- 0 581 264
- EP-A1- 1 566 405
- EP-A2- 0 212 575
- WO-A1-2010/076231
- US-A1- 2002 033 272
- DATABASE WPI Week 200656 Thomson Scientific, London, GB; AN 2006-544969 XP002627575, & JP 2006 206685 A (FUJIKURA LTD) 10 août 2006 (2006-08-10)

## Description

La présente invention se rapporte à une composition élastomère réticulable à base de copolymère(s) d'éthylène et d'acétate de vinyle, ainsi qu'à une couche réticulée pour câble.

Elle s'applique typiquement, mais non exclusivement, au domaine des câbles électriques de type câble d'énergie.

Le document US 2002/0033272 décrit un matériau réticulé utilisé pour isoler des conducteurs électriques. Ce matériau est obtenu à partir d'une composition réticulable comprenant un mélange de polymère à base d'un copolymère d'éthylène et d'acétate de vinyle, et optionnellement d'au plus 20% en poids d'une polyoléfine et/ou d'au plus 30% en poids d'un élastomère d'éthylène et d'acrylate, dans ledit mélange de polymère.

Toutefois, ce matériau ne présente pas des propriétés de résistance à la traction ainsi que des propriétés de tenue aux huiles, notamment au diesel, suffisantes.

Le but de la présente invention est de pallier les inconvénients des techniques de l'art antérieur en proposant notamment une composition réticulable, qui, une fois réticulée, présente des propriétés de résistance à la traction et de tenue aux huiles améliorées de façon significatives, tout en garantissant de bonnes propriétés de résistance au froid.

La présente invention a pour objet une composition élastomère réticulable comprenant un mélange de polymère comprenant :
- au moins un copolymère d'éthylène et d'acétate de vinyle comprenant au moins 40% en poids de groupement acétate de vinyle, et
- au moins un élastomère d'acrylate,
caractérisée en ce qu'elle comprend en outre un additif du type polymère d'une masse moléculaire inférieure à 15000g/mol, comportant sur sa chaîne principale des groupements insaturés.

Le Demandeur a découvert de façon surprenante que l'ajout dudit additif selon l'invention, dans la composition élastomère réticulable, permet avantageusement d'améliorer les propriétés de résistance à la traction et de tenue aux huiles, tout en gardant de bonnes propriétés de résistance au froid, d'une couche réticulée à partir de cette composition pour l'application câble.

La masse moléculaire dudit additif est de préférence inférieure à 10000g/mol, de préférence inférieure à 5000g/mol, et de façon particulièrement préférée inférieure à 3000g/mol.

La masse moléculaire est classiquement déterminée par Chromatographie par Perméation de Gel (CPG).

Ledit additif du type polymère, de par sa faible masse moléculaire, est classiquement considéré comme une huile dont la chaîne principale est une chaîne hydrocarbonée. Il peut donc être facilement incorporé au mélange de polymère de l'invention, et ainsi former une composition aux propriétés homogènes.

Les groupements insaturés préférés dudit additif sont des doubles liaisons.

A titre d'exemple, l'additif est un polybutadiène, et peut être notamment choisi parmi le cis-1,4-polybutadiene, et le trans-1,4-polybutadiene, ou un de leur mélange.

La chaîne principale de l'additif peut comprendre en outre des groupements anhydride maléique, afin d'améliorer la compatibilité et donc les propriétés finales entre l'additif et le mélange de polymère, notamment le copolymère d'éthylène et d'acétate de vinyle.

La composition élastomère réticulable peut comprendre au plus 15 parties en poids dudit additif pour 100 parties en poids du mélange de polymère, et de préférence au plus 10 parties en poids dudit additif pour 100 parties en poids du mélange de polymère.

Au-delà de cette limite, la composition tend à perdre ses propriétés d'allongement à la rupture à température ambiante et à basse température (inférieure à -25°C).

Le copolymère d'éthylène et d'acétate de vinyle comprend de préférence au moins 60% en poids de groupement acétate de vinyle, et de façon particulièrement préférée de 70% à 80% en poids de groupement acétate de vinyle.

Dans un mode de réalisation particulier, le mélange de polymère comprend au moins 30% en poids de groupement acétate de vinyle, et de préférence au moins 45% en poids de groupement acétate de vinyle.

Dans un autre mode de réalisation particulier, la composition élastomère réticulable comprend au moins 10% en poids de groupement acétate de vinyle, et de préférence au moins 15% en poids de groupement acétate de vinyle.

A titre d'exemple de mélange de polymère selon l'invention, le mélange de polymère peut comprendre de 50 à 80% en poids de copolymère d'éthylène et d'acétate de vinyle.

Le mélange de polymère peut en outre comprendre de 20 à 50 % en poids d'élastomère d'acrylate.

Dans un mode de réalisation particulièrement préféré, le mélange de polymère comprend uniquement un ou plusieurs copolymères d'éthylène et d'acétate de vinyle, et un ou plusieurs élastomères d'acrylate.

L'élastomère d'acrylate de l'invention peut être choisi parmi les copolymères d'éthylène et d'acrylate de butyle (EBA), les copolymères d'éthylène et d'acrylate de méthyle (EMA), les terpolymères d'éthylène, d'acrylate de méthyle et d'un monomère comportant une fonction acide carboxylique, et les copolymères d'éthylène et de 2-hexyléthyl acrylate (2HEA), ou un de leurs mélanges

On préférera utiliser les copolymères d'éthylène et d'acrylate de méthyle (EMA), et plus particulièrement dans la famille des EMA, on préférera utiliser les terpolymères d'éthylène, d'acrylate de méthyle et d'un monomère comportant une fonction acide carboxylique.

Dans un mode de réalisation particulier, la composition élastomère réticulable de l'invention ne comprend pas de composé halogéné. Ces composés halogénés peuvent être de toutes natures, tels que par exemple des polymères fluorés ou des polymères chlorés comme le polychlorure de vinyle (PVC), des plastifiants halogénés, des charges minérales halogénées, ...etc.

Afin de diminuer la chaleur de combustion de la composition de l'invention, ou en d'autres termes de réduire le taux de combustibilité, la composition peut comprendre en outre au moins une charge minérale. La composition élastomère réticulable peut comprendre au moins 75 parties en poids de charge minérale par rapport à 100 parties en poids du mélange de polymère dans la composition, de préférence au moins 90 parties en poids de charge minérale par rapport à 100 parties en poids du mélange de polymère dans la composition, et encore plus préférentiellement au moins 150 parties en poids de charge minérale par rapport à 100 parties en poids du mélange de polymère dans la composition.

La charge minérale de l'invention peut être choisie parmi une charge ignifugeante et une charge inerte (ou charge non combustible), ou un de leur mélange.

A titre d'exemple, la charge ignifugeante, qui est une charge minérale apte à libérer de l'eau lors de sa décomposition par élévation de température, peut être le trihydroxyde d'aluminium (ATH) et/ou le dihydroxyde de magnésium (MDH). La charge inerte peut être de la craie, du talc, de l'argile, et/ou du noir de carbone.

Un autre objet de l'invention concerne un câble comprenant une couche réticulée obtenue à partir de la composition élastomère réticulable selon l'invention.

La réticulation de la composition élastomère réticulable de l'invention peut s'effectuer par les techniques classiques de réticulation bien connues de l'homme du métier telles que par exemple la réticulation peroxyde; la réticulation silane en présence d'un agent de réticulation ; la réticulation par faisceaux d'électron, rayons gamma, rayons X, ou microondes ; la réticulation par voie photochimique telle que l'irradiation sous rayonnement béta, ou l'irradiation sous rayonnement ultraviolet en présence d'un photo-amorceur.

La réticulation peroxyde sous l'action de la chaleur est préférée dans le cadre de l'invention. Dans ce cas particulier, la composition élastomère réticulable comprend en outre un agent de réticulation tel qu'un peroxyde organique. La concentration en peroxyde organique dans la composition élastomère réticulable de l'invention peut être classiquement comprise entre 1 et 8 parties en poids pour 100 parties en poids de mélange de polymère dans la composition.

Dans la présente invention, on entend plus particulièrement par « câble » un câble électrique, destiné notamment au transport d'énergie.

Le câble selon l'invention comprend un ou plusieurs conducteur(s) électrique(s) entouré(s) par au moins une couche réticulée conforme à l'invention.

La couche réticulée peut être une couche électriquement isolante en contact physique avec le ou les conducteur(s) électrique(s).

Elle peut être également une gaine de protection entourant un ou plusieurs conducteur(s) électrique(s) isolé(s).

Bien entendu, la couche réticulée de l'invention est typiquement extrudée, cette technique étant bien connue de l'homme du métier.

D'autres caractéristiques et avantages de la présente invention apparaîtront à la lumière des exemples qui vont suivre en référence aux figures annotées, lesdits exemples et figures étant donnés à titre illustratif et nullement limitatif.
La figure 1 représente une vue schématique en perspective d'un câble selon un premier mode de réalisation conforme à l'invention.
La figure 2 représente une vue schématique en perspective d'un câble selon un deuxième mode de réalisation conforme à l'invention.

Pour des raisons de clarté, les mêmes éléments ont été désignés par des références identiques. De même, seuls les éléments essentiels pour la compréhension de l'invention ont été représentés de manière schématique, et ceci sans respect de l'échelle.

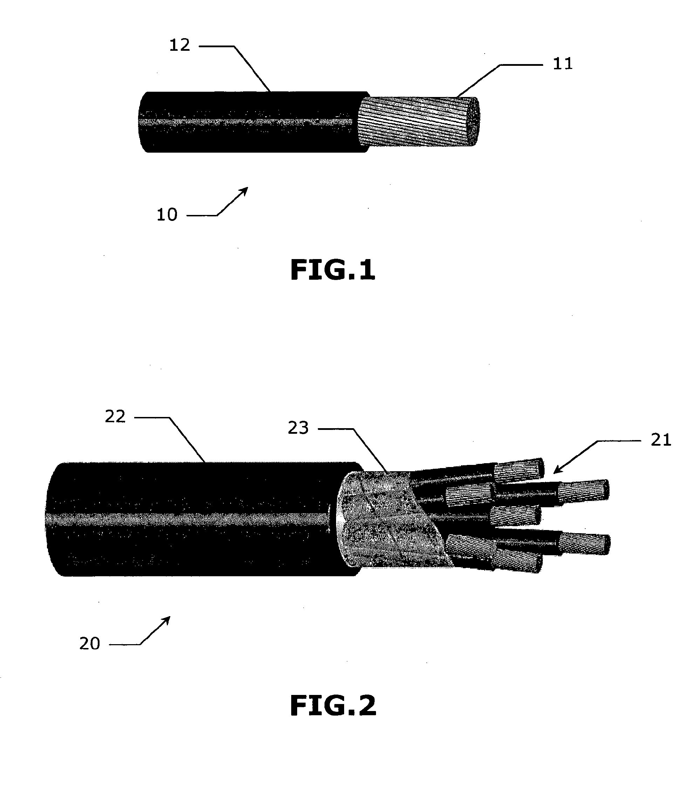

La figure 1 représente une vue schématique en perspective d'un câble 10 comprenant une âme centrale 11 de type conducteur électrique multibrins entourée par une couche 12 extrudée et réticulée, obtenue à partir de la composition élastomère réticulable selon l'invention. Le câble 10 peut également comporter un ruban (non représenté sur la figure 1) entre l'âme centrale 11 et la couche extrudée 12. Ce ruban peut être classiquement un ruban de polyester.
La figure 2 représente une vue schématique en perspective d'un câble 20 comprenant un ensemble 21 de conducteurs électriques isolés, dont la couche isolante peut être ou non obtenue à partir de la composition élastomère réticulable selon l'invention. L'ensemble 21 desdits conducteurs électriques isolés est entouré par une gaine de protection 22 extrudée et réticulée, obtenue à partir de la composition élastomère réticulable selon l'invention. Entre l'ensemble 21 desdits conducteurs électriques isolés et la gaine de protection 22, le câble 20 peut également comprendre un ruban 23 enroulé tout autour dudit ensemble, afin d'éviter que le matériau formant la gaine de protection ne pénètre à l'intérieur de l'ensemble 21 formé par lesdits conducteurs électriques isolés, notamment lors de l'étape d'extrusion de ladite gaine de protection 22. Ce ruban 23 peut être classiquement un ruban de polyester.

### Exemples

On prépare les quatre compositions suivantes :

**Tableau 1**

| Composition élastomère réticulable | 1 | 2 | 3 | 4 |
|---|---|---|---|---|
| EVA | 60 | 60 | 60 | 60 |
| EMA1 | 40 | 0 | 40 | 0 |
| EMA2 | 0 | 40 | 0 | 40 |
| Charges minérales | 160 | 160 | 160 | 160 |
| Plastifiants | 7 | 7 | 7 | 7 |
| Huile polybutadiène (additif) | 0 | 0 | 5 | 5 |
| Agents de mise en oeuvre et antioxydants | 5.8 | 5.8 | 5.8 | 5.8 |
| Agent de réticulation | 8 | 8 | 8 | 8 |
| Coagent | 1 | 1 | 1 | 1 |

La teneur des constituants dans la composition élastomère réticulable est exprimée en parties en poids pour 100 parties en poids de mélange de polymère dans la composition. Notamment, le mélange de polymère selon l'invention, dans le tableau 1, concerne soit un mélange d'EVA et d'EMA1, soit un mélange d'EVA et d'EMA2.

L'origine des constituants du tableau 1 est la suivante :
- EVA est un copolymère d'éthylène et d'acétate de vinyle comprenant 70% % en poids de groupement acétate de vinyle, commercialisé par la société Lanxess sous la référence Levapren 700HV ;
- EMA1 est un copolymère d'éthylène et d'acrylate de méthyle, commercialisé par la société Dupont Performance Elastomers sous la référence Vamac DP ;
- EMA2 est un terpolymer d'éthylène, d'acrylate de méthyle et d'un monomère contenant un acide carboxylique, commercialisé par la société Dupont Performance Elastomers sous la référence Vamac ultra IP ; et
- Huile polybutadiène est le cis-1,4-polybutadiene greffé anhydride maléique, de masse moléculaire comprise entre 2200 et 2600 g/mol (déterminée par CPG), et commercialisé par la société Evonik sous la référence Polyvest OC800.

Dans le tableau 1, les charges minérales du type charge ignifugeante, les plastifiants, l'agent de mise en oeuvre, les antioxydants, l'agent de réticulation du type peroxyde organique, et le coagent qui est un activateur de réticulation, sont des composés bien connus de l'homme du métier.

### Mise en oeuvre des compositions 1 à 4

Les constituants de chacune des compositions 1 à 4 ont été mis en oeuvre comme suit :
i. les différents constituants du tableau 1, exceptés l'agent de réticulation et le coagent, sont mélangés à l'aide d'un mélangeur interne à une température d'environ 110°C,
ii. l'agent de réticulation et le coagent sont ensuite ajoutés sur mélangeur bi-cylindres à environ 70°C au mélange de l'étape i,
iii. le mélange de l'étape ii est mise en oeuvre par extrusion autour d'un conducteur électrique pour former une couche polymérique et ainsi obtenir un câble.
iv. la couche obtenue à l'étape iii est alors réticulée sous l'action de la chaleur en introduisant le câble dans un tube vapeur à environ 190°C.

### Résultats

Les propriétés suivantes ont été mesurées :
- Propriétés mécaniques : Résistance à la traction et allongement à la rupture à température ambiante selon la norme EN 60811-1-1 :
   La résistance à la traction et l'allongement à la rupture sont déterminées à 23°C ± 2°C sur des éprouvettes haltères de type H2. Les éprouvettes sont testées à l'aide d'une machine de traction à la vitesse de 250mm/min.
   Les éprouvettes haltères de type H2 citées dans la présente invention sont préparées selon la norme EN 60811-1-1 en prélevant un échantillon de la couche polymérique réticulée du câble (obtenu à l'étape iv décrite ci-avant) d'une longueur suffisante. Chaque échantillon doit permettre le prélèvement d'au moins 5 éprouvettes pour chaque essai de traction (essai de traction initial et essai de traction après vieillissement). Les éprouvettes en forme d'haltère de type H2 sont découpées à l'aide d'un emporte-pièce.
- Propriétés mécaniques : Résistance à la traction et allongement à la rupture à froid selon la norme EN 60811-1-4 :
   Des éprouvettes haltères de type H2 sont conditionnées pendant 16 heures à -25°C ± 2°C. Puis, la résistance à la traction et l'allongement à la rupture sont déterminés à -25°C sur ces éprouvettes H2. Les éprouvettes sont testées à l'aide d'une machine de traction à la vitesse de 25 mm/min.
- Tenue au diesel selon la norme NFF 63296, partie 11.2.4.1 :
   Ce test permet de vérifier la variation de volume après action de l'huile minérale ou du combustible liquide sur des éprouvettes haltères de type H2.
- Tenue à la soude 1N selon les normes NF EN 50264-1 et EN 60811-2-1:
   Des éprouvettes haltères de type H2 sont immergées dans une solution d'hydroxyde de sodium 1N, pendant 168 heures à 23°C ± 2°C. Puis, la résistance à la traction et l'allongement à la rupture sont déterminés à 25°C ± 2°C sur ces éprouvettes de type H2. Les éprouvettes sont testées à l'aide d'une machine de traction à la vitesse de 250 mm/min.

Les résultats sont rassemblés dans le tableau 2 ci-dessous.

**Tableau 2**

| Compositions réticulées obtenue à partir des compositions élastomères réticulables suivantes : | 1 | 2 | 3 | 4 |
|---|---|---|---|---|
| Résistance à la traction (MPa) à 23°C | 6.2 | 8 | 7.6 | 9.2 |
| Allongement à la rupture (%) à 23°C | 573 | 339 | 198 | 193 |
| Allongement à la rupture (%) à -25°C | 203 | 99 | 114 | 97 |
| Variation de volume (%) après immersion dans du diesel pendant 168h à 70°C | +28 | +30 | +22 | +25 |
| Résistance à la traction (MPa) après immersion dans de la soude 1N pendant 7 jours à 23°C | NR* | 7,0 | NR* | 8,9 |
| Variation de volume (%) après immersion dans de la soude 1N pendant 7 jours à 23°C | NR* | -11 | NR* | -3 |
| Allongement à la rupture (%) après immersion dans de la soude 1N pendant 7 jours à 23°C | NR* | 315 | NR* | 165 |

| | | | | |
|---|---|---|---|---|
| *NR : Test non réalisé | | | | |

En comparant les résultats des compositions réticulées 1 et 3 d'une part, et 2 et 4 d'autre part, on observe clairement que les compositions réticulées selon l'invention (compositions réticulées 3 et 4) présentent :
- une résistance à la traction augmentée de façon significative à 23°C ;
- une tenue au diesel améliorée significativement (i.e. la variation de volume (%) après immersion dans du diesel est limitée significativement) ;
- une résistance à la soude améliorée au regard d'une résistance à la traction très satisfaisante et d'une très faible variation de volume après immersion ; et
- un allongement à la rupture satisfaisant puisqu'il reste au-dessus d'une valeur limite de 180% à 23°C et de 60% à -25°C.

## Revendications

1. Composition élastomère réticulable comprenant un mélange de polymère comprenant :
- au moins un copolymère d'éthylène et d'acétate de vinyle comprenant au moins 40% en poids de groupement acétate de vinyle, et
- au moins un élastomère d'acrylate,
**caractérisée en ce qu'**elle comprend en outre un additif du type polymère d'une masse moléculaire inférieure à 15000 g/mol, comportant sur sa chaîne principale des groupements insaturés.

2. Composition selon la revendication 1, **caractérisée en ce que** les groupements insaturés sont des doubles liaisons.

3. Composition selon la revendication 1 ou 2, **caractérisée en ce que** l'additif est un polybutadiène.

4. Composition selon l'une quelconque des revendications précédentes, **caractérisée en ce que** la chaîne principale de l'additif comprend en outre des groupements anhydride maléique.

5. Composition selon la revendication 3, **caractérisée en ce que** l'additif est choisi parmi le cis-1,4-polybutadiene, et le trans-1,4-polybutadiene, ou un de leur mélange.

6. Composition selon la revendication 3 ou 4, **caractérisée en ce que** l'additif est le cis-1,4-polybutadiene greffé anhydride maléique, de masse moléculaire comprise entre 2200 et 2600 g/mol.

7. Composition selon l'une quelconque des revendications précédentes, **caractérisée en ce que** la composition comprend au plus 15 parties en poids dudit additif pour 100 parties en poids du mélange de polymère.

8. Composition selon l'une quelconque des revendications précédentes, **caractérisée en ce que** le copolymère d'éthylène et d'acétate de vinyle comprend au moins 60% en poids de groupement acétate de vinyle.

9. Composition selon l'une quelconque des revendications précédentes, **caractérisée en ce que** le mélange de polymère comprend de 50 à 80 % en poids de copolymère d'éthylène et d'acétate de vinyle.

10. Composition selon l'une quelconque des revendications précédentes, **caractérisée en ce que** le mélange de polymère comprend de 20 à 50 % en poids d'élastomère d'acrylate.

11. Composition selon l'une quelconque des revendications précédentes, **caractérisée en ce que** le mélange de polymère comprend uniquement un ou plusieurs copolymères d'éthylène et d'acétate de vinyle, et un ou plusieurs élastomères d'acrylate.

12. Composition selon l'une quelconque des revendications précédentes, **caractérisée en ce que** l'élastomère d'acrylate est choisi parmi les copolymères d'éthylène et d'acrylate de butyle (EBA), les copolymères d'éthylène et d'acrylate de méthyle (EMA), les terpolymères d'éthylène, d'acrylate de méthyle et d'un monomère comportant une fonction acide carboxylique, et les copolymères d'éthylène et de 2-héxyléthyl acrylate (2HEA), ou un de leurs mélanges.

13. Composition selon l'une quelconque des revendications précédentes, **caractérisée en ce qu'**elle ne comprend pas de composé halogéné.

14. Câble comprenant une couche réticulée obtenue à partir de la composition élastomère réticulable telle que définie aux revendications 1 à 13.

## Patentansprüche

1. Vernetzbare Elastomerzusammensetzung, die ein Polymergemisch umfasst, das umfasst:
- mindestens ein Ethylen- und Vinylacetatcopolymer, das mindestens 40 Gew.-% Vinylacetatgruppe umfasst, und
- mindestens ein Acrylatelastomer,
**dadurch gekennzeichnet, dass** sie ferner einen Zusatzstoff vom Typ Polymer mit einer Molekularmasse unter 15.000 g/mol umfasst, der auf seiner Hauptkette ungesättigte Gruppen aufweist.

2. Zusammensetzung nach Anspruch 1, **dadurch gekennzeichnet, dass** die ungesättigten Gruppen Doppelbindungen sind.

3. Zusammensetzung nach Anspruch 1 oder 2, **dadurch gekennzeichnet, dass** der Zusatzstoff ein Polybutadien ist.

4. Zusammensetzung nach einem der vorangehenden Ansprüche, **dadurch gekennzeichnet, dass** die Hauptkette des Zusatzstoffs ferner Maleinsäureanhydridgruppen umfasst.

5. Zusammensetzung nach Anspruch 3, **dadurch gekennzeichnet, dass** der Zusatzstoff aus dem cis-1,4-Polybutadien und dem trans-1,4-Polybutadien oder einem ihrer Gemische ausgewählt ist.

6. Zusammensetzung nach Anspruch 3 oder 4, **dadurch gekennzeichnet, dass** der Zusatzstoff das mit Maleinsäureanhydrid gepfropfte cis-1,4-Polybutadien mit einer Molekularmasse zwischen 2.200 und 2.600 g/mol inklusive ist.

7. Zusammensetzung nach einem der vorangehenden Ansprüche, **dadurch gekennzeichnet, dass** die Zusammensetzung höchstens 15 Gewichtsteile des Zusatzstoffs auf 100 Gewichtsteile des Polymergemischs umfasst.

8. Zusammensetzung nach einem der vorangehenden Ansprüche, **dadurch gekennzeichnet, dass** das Ethylen- und Vinylacetatcopolymer mindestens 60 Gew.- % Vinylacetatgruppe umfasst.

9. Zusammensetzung nach einem der vorangehenden Ansprüche, **dadurch gekennzeichnet, dass** das Polymergemisch mindestens 50 bis 80 Gew.-% Ethylen- und Vinylacetatcopolymer umfasst.

10. Zusammensetzung nach einem der vorangehenden Ansprüche, **dadurch gekennzeichnet, dass** das Polymergemisch 20 bis 50 Gew.-% Acrylatelastomer umfasst.

11. Zusammensetzung nach einem der vorangehenden Ansprüche, **dadurch gekennzeichnet, dass** das Polymergemisch nur ein oder mehrere Ethylen- und Vinylacetatcopolymere und ein oder mehrere Acrylatelastomere umfasst.

12. Zusammensetzung nach einem der vorangehenden Ansprüche, **dadurch gekennzeichnet, dass** das Acrylatelastomer aus den Ethylen- und Butylacrylatcopolymeren (EBA), den Ethylen- und Methylacrylatcopolymeren (EMA), den Ethylen-, Methylacrylatterpolymeren und einem Monomer mit einer Carboxylsäurefunktion und den Ethylen- und 2-Hexylethylacrylatcopolymeren (2HEA) oder einem ihrer Gemische ausgewählt ist.

13. Zusammensetzung nach einem der vorangehenden Ansprüche, **dadurch gekennzeichnet, dass** sie keine Halogenverbindung umfasst.

14. Kabel, das eine vernetzte Schicht aus der vernetzbaren Elastomerzusammensetzung nach den Ansprüchen 1 bis 13 umfasst.

## Claims

1. A cross-linkable elastomeric composition comprising a polymer mixture comprising:
- at least one copolymer of ethylene and vinyl acetate comprising at least 40% by weight of vinyl acetate group, and
- at least one acrylate elastomer,
**characterized in that** it further comprises an additive of the polymer type with a molecular mass of less than 15,000 g/mol, including on its main chain unsaturated groups.

2. The composition according to claim 1, **characterized in that** the unsaturated groups are double bonds.

3. The composition according to claim 1 or 2, **characterized in that** the additive is a polybutadiene.

4. The composition according to any of the preceding claims, **characterized in that** the main chain of the additive further comprises maleic anhydride groups.

5. The composition according to claim 3, **characterized in that** the additive is selected from cis-1,4-polybutadiene and trans-1,4-polybutadiene, or one of their mixtures.

6. The composition according to claim 3 or 4, **characterized in that** the additive is cis-1,4-polybutadiene grafted with maleic anhydride, of a molecular mass comprised between 2,000 and 2,600 g/mol.

7. The composition according to any of the preceding claims, **characterized in that** the composition comprises at most 15 parts by weight of said additive for 100 parts by weight of the polymer mixture.

8. The composition according to any of the preceding claims, **characterized in that** the copolymer of ethylene and vinyl acetate comprises at least a 60% by weight of a vinyl acetate group.

9. The composition according to any of the preceding claims, **characterized in that** the polymer mixture comprises from 50 to 80% by weight of copolymer of ethylene and vinyl acetate.

10. The composition according to any of the PC claims, **characterized in that** the polymer mixture comprises from 20 to 50% by weight of acrylate elastomer.

11. The composition according to any of the preceding claims, **characterized in that** the polymer mixture only comprises one or several copolymers of ethylene and vinyl acetate, and a one or several acrylate elastomers.

12. The composition according to any of the preceding claims, **characterized in that** the acrylate elastomer is selected from copolymers of ethylene and butyl acetate (EBA), copolymers of ethylene and methyl acrylate (EMA), terpolymers of ethylene, methyl acrylate and of a monomer including a carboxylic acid function, and copolymers of ethylene and 2-hexylethyl acrylate (2HEA), or one of their mixtures.

13. The composition according to any of the preceding claims, **characterized in that** it does not comprise any halogenated compound.

14. A cable comprising a cross-linked layer obtained from the cross-linkable elastomeric composition as defined in claims 1 to 13.
